# FASCICULE DE BREVET EUROPEEN

(11) **EP 3 667 680 B1**
(45) Date de publication et mention de la délivrance du brevet: **05.05.2021**
(21) Numéro de dépôt: 19210180.6
(22) Date de dépôt: 19.11.2019
(51) Int. Cl.: H01B 1/12, F02F 7/00, H01B 1/22, C08K 3/08, H05B 3/40, F01M 13/00, F01P 3/00

(54) **COUVRE-CULASSE COMPRENANT UN MOYEN DE FIXATION AVEC UN THERMOPLONGEUR**
ZYLINDERKOPFDECKEL, DER EIN BEFESTIGUNGSMITTEL FÜR EIN TAUCHHEIZELEMENT UMFASST
CYLINDER-HEAD COVER COMPRISING A MEANS FOR ATTACHING WITH A HEAT ROD

(30) Priorité: 11.12.2018 FR 1872666
(43) Date de publication de la demande: 17.06.2020
(73) Titulaire: RENAULT s.a.s., 92100 Boulogne-Billancourt (FR)
(72) Inventeur: Millon, Jean-Pierre, 78870 Bailly (FR); GRATIAN, Jean-Louis, 95120 ERMONT (FR)

(56) Documents cités:
- EP-A2- 1 286 046
- DE-A1- 3 814 955
- DE-A1-102016 216 230
- DE-U1-202006 010 709
- JP-A- 2006 090 201
- JP-A- 2013 133 779
- JP-A- 2017 067 023
- US-A- 2 641 239

## Description

L'invention a trait à un couvre-culasse pour moteur à combustion interne de véhicule automobile. Particulièrement, l'invention concerne un couvre-culasse conçu de façon à recevoir au moins un thermoplongeur.

De manière connue, après le démarrage du véhicule, le moteur met un certain temps à atteindre sa température de bon fonctionnement. Pendant cette période de montée en température, encore appelée la période de fonctionnement à froid du moteur, la consommation en carburant et les émissions des polluants sont élevées. En effet, lors du fonctionnement à froid du moteur, la température n'est pas suffisamment élevée pour fluidifier l'huile utilisée en tant que lubrifiant. Ceci entraîne des pertes mécaniques par frottement des différentes pièces du moteur. Il faut donc consommer plus de carburant pour compenser ces pertes mécaniques

Un couvre-culasse pour moteur à combustion interne est connu de DE 10 2016 216230 A1.

L'accélération de la montée en température du moteur est donc souhaitée. Pour ce faire, de nombreux dispositifs ont été mis en place pour raccourcir la période de fonctionnement à froid du moteur.

A titre d'exemple, des moyens chauffants électriques tels que des thermoplongeurs ou des résistances chauffantes électriques sont utilisés pour chauffer rapidement le liquide de refroidissement, favorisant ainsi la montée en température du moteur.

Par ailleurs, le thermoplongeur participe à chauffer le liquide circulant dans le circuit de chauffage du véhicule et permet ainsi d'améliorer le confort thermique du ou des passagers présents dans le véhicule. En outre, le thermoplongeur permet une montée plus rapide du liquide, notamment de l'eau, pour atteindre plus rapidement des régimes de fonctionnement optimaux du moteur.

De manière générale, les thermoplongeurs sont montés dans un boîtier qui est traversé par un canal de circulation de liquide de refroidissement. Le boîtier est une pièce distincte du moteur et placée près de celui-ci dans le compartiment moteur.

Toutefois, dans certains modèles de véhicule, notamment des véhicules citadins, l'espace du compartiment moteur est limité. Ainsi, il est difficile de placer le boîtier de thermoplongeurs dans cet espace restreint.

En outre, le boîtier est relié au moteur par des tuyaux de connexion permettant la circulation du liquide de refroidissement du moteur vers le boîtier et inversement. Cependant, cet agencement est encombrant et peu pratique à réaliser.

Un but de la présente invention est de répondre aux inconvénients de l'art antérieur mentionné ci-dessus et en particulier, de proposer un agencement compact et pratique des thermoplongeurs dans le compartiment moteur d'un véhicule.

Pour cela, un premier aspect de l'invention concerne un couvre-culasse pour moteur à combustion interne de véhicule automobile comprenant un corps et un canal de circulation de liquide refroidissement réalisé dans ledit corps.

Selon l'invention, le canal de circulation de liquide de refroidissement comprend une ouverture destinée à recevoir au moins un thermoplongeur. Le couvre-culasse comprend un couvercle fermant l'ouverture du canal et comprenant un moyen de fixation avec le thermoplongeur. De plus, le couvercle est réalisé en matière plastique électriquement conductrice et relié à la masse.

La solution proposée permet de résoudre les problèmes précités. En particulier, le couvre-culasse est aménagé de manière à pouvoir recevoir le thermoplongeur. De plus, le couvercle comprend des moyens de fixation permettant de tenir le thermoplongeur en place. En d'autres termes, le couvercle forme un support pour le thermoplongeur.

De cette manière, le thermoplongeur est installé directement sur le couvre-culasse, donc sur le moteur, ce qui permet de supprimer le boîtier de l'art antérieur sur lequel est monté le thermoplongeur. Ainsi, on n'a donc plus besoin de réserver une place pour ce boîtier dans le compartiment moteur. L'installation du thermoplongeur directement sur le couvre-culasse permet un agencement compact du thermoplongeur dans le compartiment moteur.

De plus, les tuyaux de connexion entre le boîtier et le moteur sont également supprimés. Le montage du thermoplongeur est donc simplifié.

Dans le contexte de l'invention, on entend par « masse » la borne négative d'une source électrique, par exemple d'une batterie électrique. Ici, le couvercle sert non seulement de support du thermoplongeur, mais également un moyen de connexion électrique entre le thermoplongeur et la masse, ce qui assure un bon fonctionnement du thermoplongeur. Précisément, le moyen de fixation du couvercle est au contact avec une portion du thermoplongeur qui est destinée à être reliée à la borne négative de la source électrique.

En outre, le couvercle réalisé en matière plastique est léger et suffisamment rigide pour réaliser sa fonction de support. De plus, les méthodes de fabrication des pièces en plastique permettent de réaliser des formes complexes qui s'adaptent facilement à la configuration du thermoplongeur et du couvre-culasse.

Le couvre-culasse selon l'invention peut optionnellement comprendre une ou plusieurs des caractéristiques suivantes :
- le couvre-culasse comprend au moins une vis de fixation, électriquement conductrice, attachant le couvercle au corps du couvre-culasse ; il s'agit ici d'un moyen de fixation simple et économique pour attacher le couvercle au couvre-culasse tout en permettant une connexion électrique entre ces deux éléments ;
- la vis de fixation comprend une partie filetée coopérant avec un trou taraudé réalisé dans le corps du couvre-culasse ; ainsi, le thermoplongeur est relié à la masse par l'intermédiaire du corps du couvre-culasse ;
- la vis de fixation comprend une partie filetée coopérant avec un écrou ; l'écrou est relié à la masse par un moyen de solidarisation électriquement conducteur ; à titre d'exemple, le moyen de solidarisation peut être une nappe conductrice ;
- le couvercle comprend un trou à travers lequel passe la vis de fixation ; le couvre-culasse comprend un insert électriquement conducteur disposé dans le trou et en contact d'une part avec la vis de fixation et d'autre part avec le couvercle lorsque le couvercle est fixé au corps du couvre-culasse ; ainsi, l'insert permet de renforcer la connexion électrique entre le couvercle et la vis de fixation;
- le corps du couvre-culasse comprend un conduit d'air comprenant une entrée d'air ; le couvercle comprend une première ouverture traversante disposée en vis-à-vis de l'entrée d'air lorsque le couvercle est fixé au corps du couvre-culasse, ladite première ouverture traversante étant destinée à recevoir un conduit d'alimentation d'air;
- le corps du couvre-culasse comprend un conduit d'air comprenant une sortie d'air ; le couvercle comprend une deuxième ouverture traversante disposée en vis-à-vis de ladite sortie lorsque le couvercle est fixé au corps du couvre-culasse, ladite deuxième ouverture traversante étant destinée à être raccordée à un conduit de sortie d'air ;
- le couvercle électriquement conducteur est réalisé en une matière plastique chargée de particules électriquement conductrices.

L'invention a également pour objet un moteur à combustion interne de véhicule automobile comprenant un couvre-culasse selon l'invention.

L'invention a aussi pour objet un véhicule automobile comprenant un moteur à combustion interne selon l'invention ou un couvre-culasse selon l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig.1] représente une vue en perspective d'un exemple de réalisation d'un couvre-culasse selon l'invention;
[fig.2] représente une vue en perspective de la zone référencée II sur la figure 1 ;
[fig.3] représente une vue de dessus de la zone référencée II sur la figure 1;
[fig.4] représente une vue de coupe selon le plan IV-IV illustré sur la figure 3.

Les éléments structurellement et fonctionnellement identiques, présents dans plusieurs figures distinctes, sont affectés d'une seule et même référence numérique ou alphanumérique.

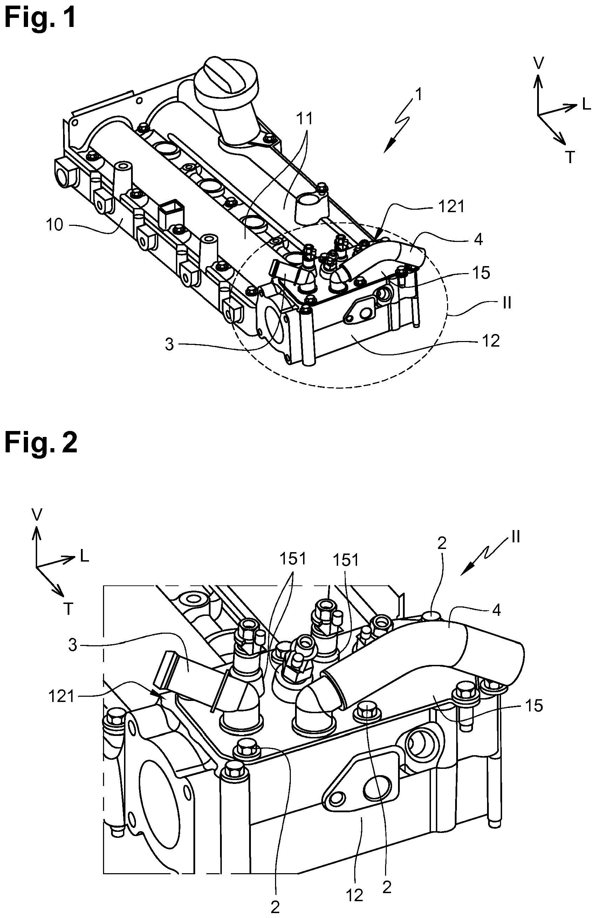

Dans la suite de la description, on adoptera une direction verticale représentée par l'axe V, une direction transversale horizontale ou latérale horizontale représentée par l'axe T et une direction longitudinale horizontale représentée par l'axe L. Ces trois axes sont illustrés sur les figures 1 à 4.

En référence à la figure 1, un couvre-culasse 1, selon un exemple de réalisation de l'invention, comprend un corps 10, ici, réalisé notamment en fonte selon le procédé de fonderie sous pression. Le corps 10 du couvre-culasse comprend deux portions allongées 11 destinées à couvrir deux arbres à cames parallèles l'un à l'autre.

A une extrémité latérale desdites portions allongées 11 se trouve un bloc 12 dans lequel sont pratiqués un canal de circulation de liquide de refroidissement, ci-après appelé le canal, et un conduit d'air. Le canal et le conduit d'air ne sont pas visibles sur les figures.

Dans l'exemple illustré, le canal comprend une ouverture débouchant à une face supérieure 121 du bloc 12, l'ouverture ayant pour but d'accueillir des thermoplongeurs. Ceux-ci sont ainsi immergés dans le canal afin de chauffer le liquide de refroidissement notamment pour accélérer la montée en température du moteur. Ici, les thermoplongeurs sont au nombre de quatre.

De façon similaire, le conduit d'air comprend également une entrée et une sortie d'air débouchant toutes les deux à la face supérieure 121. Ici, le conduit d'air achemine de l'air à haute pression sortant d'un turbocompresseur vers le circuit d'admission ou vers un échangeur thermique.

Un couvercle 15 couvre la face supérieure 121 de manière à obturer l'ouverture du canal tout en permettant l'insertion des thermoplongeurs dans le canal. De plus, le couvercle 15 est mis sur le bloc 12 de façon à laisser à découvert l'entrée et la sortie du conduit d'air pour que l'entrée puisse recevoir de l'air d'un conduit d'alimentation d'air 3 et pour que l'air puisse évacuer dans un conduit de sortie d'air 4.

Plus précisément, le couvercle 15 comprend une première ouverture traversante disposée face à l'entrée du conduit d'air et une deuxième ouverture traversante disposée face à la sortie du conduit d'air lorsque le couvercle 15 est monté sur la face supérieure 121 du bloc 2. La première ouverture reçoit le conduit d'alimentation 3 tandis que la deuxième ouverture reçoit le conduit de sortie 4.

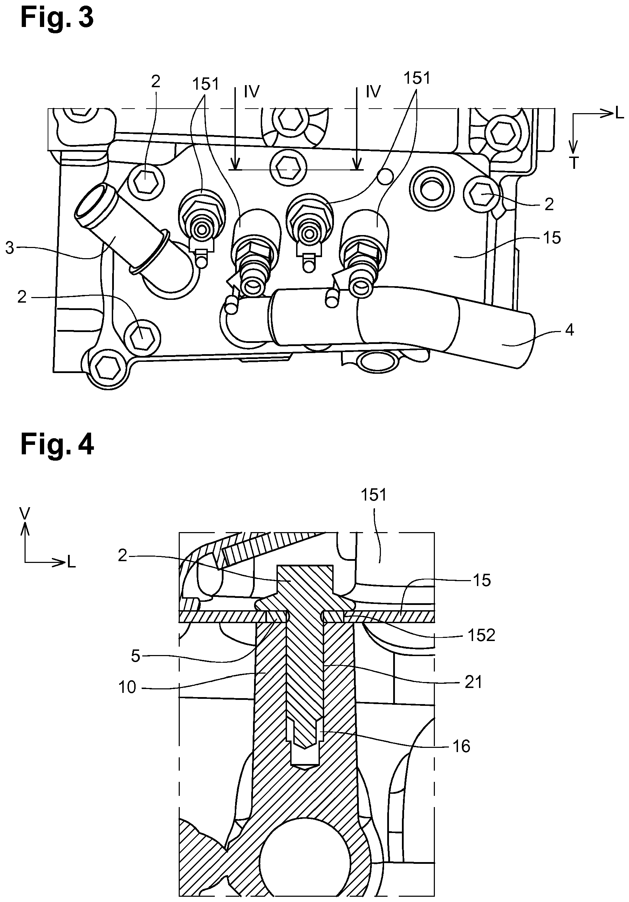

Le bloc 12 est illustré en détail à la figure 2 et à la figure 3.

Sur ces figures, le couvercle 15, en forme d'une plaque plane, comprend des saillies 151 cylindriques creux. Les thermoplongeurs sont emmanchés dans ces saillies pour atteindre le canal. Chacune des saillies 151 est agencée de manière à maintenir une partie d'un manchon du thermoplongeur de sorte que celui-ci soit positionné de manière stable et fixe sur le couvercle 15.

A titre d'exemple, les saillies 151 ont un diamètre égal ou légèrement supérieur au diamètre des manchons de sorte que les manchons sont maintenus dans les saillies 151 par friction. Dans un exemple de réalisation, les saillies 151 peuvent être réalisées par un taraudage et les thermoplongeurs sont insérés dans lesdites saillies taraudées 151 sans être vissés.

Les saillies 151 servent ainsi de moyens de fixation des thermoplongeurs au couvercle 15. En d'autres termes, le couvercle 15 est un support pour les thermoplongeurs.

Dans l'exemple illustré, le couvercle 15 est une plaque en plastique. Ainsi, le couvercle 15 peut être réalisé par différentes méthodes de fabrication, telles que le moulage, l'injection ou l'extrusion. Le couvercle peut avoir une forme adaptée au besoin spécifique, comme notamment celle du couvercle 15 de l'exemple présenté qui comprend quatre saillies 151 supportant chacune un thermoplongeur. Donc, le couvercle 15 est suffisant de lui-même pour supporter les quatre thermoplongeurs.

Par ailleurs, le couvercle 15 en matière plastique intègre des particules électriquement conductrices. Comme décrit précédemment, les saillies 151 sont au contact avec une partie du manchon des thermoplongeurs. Ceci permet la circulation d'un courant électrique entre ladite partie du manchon et le couvercle. A noter que cette partie du manchon est destinée à être reliée à la masse, ici à la borne négative d'une batterie électrique, afin d'assurer le bon fonctionnement des thermoplongeurs.

Dans cet exemple, le couvercle 15 est fixé au bloc 12, ou précisément au corps 10 du couvre-culasse 1. Ici, la fixation du couvercle au corps 10 est réalisée par des vis de fixation 2. Dans cet exemple, les vis de fixation 2 sont au nombre de six. Les vis de fixation 2 sont également conductrices. A titre d'exemple, les vis de fixation 2 sont des vis métalliques.

Comme illustré sur la figure 4, une vis de fixation 2 est insérée dans un trou taraudé 16 réalisé dans le corps 10 du couvre-culasse. La vis de fixation 2 comprend une partie filetée 21 coopérant avec une partie taraudée du trou 16.

Un insert métallique 5 est posé en dessous de la tête de la vis de fixation 2. L'insert métallique 5 présente la forme d'une rondelle qui est insérée dans un orifice 152 à travers lequel est insérée la vis de fixation 2. L'insert métallique 5 est agencé dans l'orifice 152 de manière à être en contact d'une part avec le couvercle 15 et d'autre part avec la vis de fixation 2. Ici, l'insert métallique 5 touche le col de la vis de fixation 2.

L'insert métallique 5, ainsi disposé, assure un meilleur passage du courant électrique entre le couvercle 15 et la vis de fixation 2.

La fixation du couvercle 15 au corps 10 du couvre-culasse 1 et des thermoplongeurs au couvercle 15 permet de relier les thermoplongeurs à la masse, notamment à une borne négative d'une batterie électrique.

Précisément, la connexion électrique est établie entre la partie du manchon des thermoplongeurs avec le couvercle 15 par l'intermédiaire des saillies 151, puis entre le couvercle 15 et l'insert métallique 5, ensuite entre l'insert métallique 5 et la vis de fixation 2 et enfin entre la vis de fixation 2 et le corps 10 du couvre-culasse. Etant donné que ledit corps 10 est relié à la masse, il y a une continuité électrique de la partie du manchon des thermoplongeurs vers la masse.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Couvre-culasse (1) pour moteur à combustion interne de véhicule automobile comprenant un corps (10) et un canal de circulation de liquide refroidissement réalisé dans ledit corps, ledit couvre-culasse (1) étant **caractérisé en ce que** :
- le canal de circulation de liquide de refroidissement comprend une ouverture destinée à recevoir au moins un thermoplongeur ;
- le couvre-culasse (1) comprend un couvercle (15) fermant l'ouverture du canal et comprenant un moyen de fixation (151) avec le thermoplongeur ; et
- le couvercle (15) est réalisé en matière plastique électriquement conductrice et relié à la masse.

2. Couvre-culasse (1) selon la revendication 1, **caractérisé en ce qu'**il comprend au moins une vis de fixation (2), électriquement conductrice, attachant le couvercle (15) au corps du couvre-culasse (1).

3. Couvre-culasse (1) selon la revendication 2, **caractérisé en ce que** la vis de fixation (2) comprend une partie filetée coopérant avec un trou taraudé (16) réalisé dans le corps (10) du couvre-culasse (1).

4. Couvre-culasse (1) selon la revendication 2, **caractérisé en ce que** la vis
de fixation comprend une partie filetée coopérant avec un écrou, et **en ce que** l'écrou est relié à la masse par un moyen de solidarisation électriquement conducteur.

5. Couvre-culasse (1) selon l'une des revendications 2 à 4, **caractérisé en ce que** le couvercle (15) comprend un trou (152) à travers lequel passe la vis de fixation (2), **en ce que** le couvre-culasse (1) comprend un insert (5) électriquement conducteur disposé dans le trou (152) et en contact d'une part avec la vis de fixation (2) et d'autre part avec le couvercle (15) lorsque le couvercle (15) est fixé au corps (10) du couvre-culasse (1).

6. Couvre-culasse (1) selon l'une des revendications précédentes, **caractérisé en ce que** le corps (10) du couvre-culasse (1) comprend un conduit d'air comprenant une entrée d'air, et **en ce que** le couvercle comprend une première ouverture traversante disposée en vis-à-vis de l'entrée d'air lorsque le couvercle (15) est fixé au corps (10) du couvre-culasse (1), ladite première ouverture traversante étant destinée à recevoir un conduit d'alimentation d'air (3).

7. Couvre-culasse (1) selon l'une des revendications précédentes, **caractérisé en ce que** le corps (10) du couvre-culasse (1) comprend un conduit d'air comprenant une sortie d'air, et **en ce que** le couvercle (15) comprend une deuxième ouverture traversante disposée en vis-à-vis de ladite sortie lorsque le couvercle (15) est fixé au corps (10) du couvre-culasse (1), ladite deuxième ouverture traversante étant destinée à être raccordée à un conduit de sortie d'air (4).

8. Couvre-culasse (1) selon l'une des revendications précédentes, **caractérisé en ce que** le couvercle (15) électriquement conducteur est réalisé en une matière plastique chargée de particules électriquement conductrices.

9. Moteur à combustion interne de véhicule automobile **caractérisé en ce qu'**il comprend un couvre-culasse (1) selon l'une des revendications précédentes.

10. Véhicule automobile **caractérisé en ce qu'**il comprend un moteur à combustion interne selon la revendication précédente ou un couvre-culasse (1) selon l'une des revendications 1 à 8.

## Patentansprüche

1. Zylinderkopfdeckel (1) für einen Kraftfahrzeug-Verbrennungsmotor umfassend einen Körper (10) und einen Kanal zur Zirkulation von Kühlflüssigkeit, der in dem Körper ausgebildet ist, wobei der Zylinderkopfdeckel (1) **dadurch gekennzeichnet ist, dass**:
- der Kanal zur Zirkulation von Kühlflüssigkeit eine Öffnung umfasst, die dazu bestimmt ist, mindestens ein Tauchheizelement aufzunehmen;
- der Zylinderkopfdeckel (1) eine Abdeckung (15) umfasst, die die Öffnung des Kanals verschließt und ein Befestigungsmittel (151) mit dem Tauchheizelement umfasst; und
- die Abdeckung (15) aus elektrisch leitendem Kunststoff gebildet und mit der Masse verbunden ist.

2. Zylinderkopfdeckel (1) nach Anspruch 1, **dadurch gekennzeichnet, dass** er mindestens eine elektrisch leitende Befestigungsschraube (2) umfasst, die die Abdeckung (15) am Körper des Zylinderkopfdeckels (1) anbringt.

3. Zylinderkopfdeckel (1) nach Anspruch 2, **dadurch gekennzeichnet, dass** die Befestigungsschraube (2) einen Gewindeabschnitt umfasst, der mit einem Innengewindeloch (16) zusammenwirkt, das im Körper (10) des Zylinderkopfdeckels (1) ausgebildet ist.

4. Zylinderkopfdeckel (1) nach Anspruch 2, **dadurch gekennzeichnet, dass** die Befestigungsschraube einen Gewindeabschnitt umfasst, der mit einer Mutter zusammenwirkt, und dadurch, dass die Mutter durch ein elektrisch leitendes Mittel zur festen Verbindung mit der Masse verbunden ist.

5. Zylinderkopfdeckel (1) nach einem der Ansprüche 2 bis 4, **dadurch gekennzeichnet, dass** die Abdeckung (15) ein Loch (152) umfasst, durch welches die Befestigungsschraube (2) hindurchgeht, dadurch, dass der Zylinderkopfdeckel (1) einen elektrisch leitenden Einsatz (5) umfasst, der im Loch (152) angeordnet ist und mit der Befestigungsschraube (2) einerseits und der Abdeckung (15) andererseits in Kontakt steht, wenn die Abdeckung (15) am Körper (10) des Zylinderkopfdeckels (1) befestigt ist.

6. Zylinderkopfdeckel (1) nach einem der vorhergehenden Ansprüche, **dadurch gekennzeichnet, dass** der Körper (10) des Zylinderkopfdeckels (1) eine Luftleitung mit einem Lufteinlass umfasst, und dadurch, dass die Abdeckung eine erste Durchgangsöffnung umfasst, die gegenüber dem Lufteinlass angeordnet ist, wenn die Abdeckung (15) am Körper (10) des Zylinderkopfdeckels (1) befestigt ist, wobei die erste Durchgangsöffnung dazu bestimmt ist, eine Luftzufuhrleitung (3) aufzunehmen.

7. Zylinderkopfdeckel (1) nach einem der vorhergehenden Ansprüche, **dadurch gekennzeichnet, dass** der Körper (10) des Zylinderkopfdeckels (1) eine Luftleitung mit einem Luftauslass umfasst, und dadurch, dass die Abdeckung (15) eine zweite Durchgangsöffnung umfasst, die gegenüber dem Auslass angeordnet ist, wenn die Abdeckung (15) am Körper (10) des Zylinderkopfdeckels (1) befestigt ist, wobei die zweite Durchgangsöffnung dazu bestimmt ist, an eine Luftauslassleitung (4) angeschlossen zu sein.

8. Zylinderkopfdeckel (1) nach einem der vorhergehenden Ansprüche, **dadurch gekennzeichnet, dass** die elektrisch leitende Abdeckung (15) aus einem Kunststoff gebildet ist, der mit elektrisch leitenden Partikeln gefüllt ist.

9. Kraftfahrzeug-Verbrennungsmotor, **dadurch gekennzeichnet, dass** er einen Zylinderkopfdeckel (1) nach einem der vorhergehenden Ansprüche umfasst.

10. Kraftfahrzeug, **dadurch gekennzeichnet, dass** es einen Verbrennungsmotor nach dem vorhergehenden Anspruch oder einen Zylinderkopfdeckel (1) nach einem der Ansprüche 1 bis 8 umfasst.

## Claims

1. Cylinder-head cover (1) for a motor vehicle internal combustion engine, comprising a body (10) and a liquid-coolant circulation duct formed in said body, said cylinder-head cover (1) being **characterized in that**:
- the liquid-coolant circulation duct comprises an opening intended to receive at least one immersion heater;
- the cylinder-head cover (1) comprises a cover plate (15) closing the opening of the duct and comprising a fixing means (151) for fixing with the immersion heater; and
- the cover plate (15) is made of electrically conducting plastics material and connected to earth.

2. Cylinder-head cover (1) according to Claim 1, **characterized in that** it comprises at least one electrically conducting fixing screw (2) attaching the cover plate (15) to the body of the cylinder-head cover (1).

3. Cylinder-head cover (1) according to Claim 2, **characterized in that** the fixing screw (2) comprises a threaded portion cooperating with a tapped hole (16) formed in the body (10) of the cylinder-head cover (1).

4. Cylinder-head cover (1) according to Claim 2, **characterized in that** the fixing screw comprises a threaded portion cooperating with a nut, and **in that** the nut is connected to earth by an electrically conducting securing means.

5. Cylinder-head cover (1) according to one of Claims 2 to 4, **characterized in that** the cover plate (15) comprises a hole (152) through which the fixing screw (2) passes, and **in that** the cylinder-head cover (1) comprises an electrically conducting insert (5) arranged in the hole (152) and in contact, on the one hand, with the fixing screw (2) and, on the other hand, with the cover plate (15) when the cover plate (15) is fixed to the body (10) of the cylinder-head cover (1).

6. Cylinder-head cover (1) according to one of the preceding claims, **characterized in that** the body (10) of the cylinder-head cover (1) comprises an air duct comprising an air inlet, and **in that** the cover plate comprises a first through-opening arranged opposite the air inlet when the cover plate (15) is fixed to the body (10) of the cylinder-head cover (1), said first through-opening being intended to receive an air supply duct (3).

7. Cylinder-head cover (1) according to one of the preceding claims, **characterized in that** the body (10) of the cylinder-head cover (1) comprises an air duct comprising an air outlet, and **in that** the cover plate (15) comprises a second through-opening arranged opposite said outlet when the cover plate (15) is fixed to the body (10) of the cylinder-head cover (1), said second through-opening being intended to be connected to an air supply duct (4).

8. Cylinder-head cover (1) according to one of the preceding claims, **characterized in that** the electrically conducting cover plate (15) is made of a plastics material filled with electrically conducting particles.

9. Motor vehicle internal combustion engine, **characterized in that** it comprises a cylinder-head cover (1) according to one of the preceding claims.

10. Motor vehicle, **characterized in that** it comprises an internal combustion engine according to the preceding claim or a cylinder-head cover (1) according to one of Claims 1 to 8.
